# EUROPEAN PATENT SPECIFICATION

(11) **EP 2 564 060 B1**
(45) Date of publication and mention of the grant of the patent: **17.08.2016**
(21) Application number: 10765743.9
(22) Date of filing: 06.09.2010
(51) Int. Cl.: F03D 7/02, F03D 9/00

(54) **WINDMILL DRIVEN ENERGY CONVERTING DEVICE**
WINDMÜHLENBETRIEBENE ENERGIEUMWANDLUNGSVORRICHTUNG
DISPOSITIF DE CONVERSION D'ÉNERGIE ENTRAÎNÉE PAR ÉOLIENNE

(30) Priority: 09.09.2009 DK 200901011
(43) Date of publication of application: 06.03.2013
(73) Proprietor: Wind Heat A/S, 8370 Hadsten (DK)
(72) Inventor: PEDERSEN, Alfred, Lisbjerg, DK-8850 Bjerringbro (DK)
(74) Representative: Nielsen, Charlotte
(86) International application number: PCT/DK2010/000123
(87) International publication number: WO 2011/029446

(56) References cited:
- DE-A1- 3 008 327
- FR-A- 1 011 132
- GB-A- 1 519 878

## Description

### Field of the Invention

The present invention generally relates to a device for converting wind energy to heat or electricity. The invention more particularly relates to a wind guide unit configured to guide wind from one direction to another direction within a device for converting wind energy to heat or electricity.

### Background of the Invention

It is known to produce heat directly from wind energy. US 4 421 967 discloses a windmill having a drive shaft which is coupled to an eddy current heater. The eddy current heater has a rotor coupled to the drive shaft, a stator, and means for exciting magnetic fields between the rotor and the stator. As the drive shaft rotates the rotor with respect to the stator, eddy currents and thus heat are generated as a function of the magnetic flux density and the relative speed between the rotor and the stator.

US 4 486 638 discloses a device for converting heat directly from rotational energy. The device consists of a multi-polar rotor with permanent magnets, of a stator having an electrically conducting wall subjected to the magnetic induction generated by the rotation of the permanent magnets and thus producing a resistant couple by generation of eddy currents. The device also consists of a heat exchanger, wherein said heat-carrying fluid circuit is formed within the stator by said electrically conducting wall.

US 4,379,236 A discloses a windmill generator apparatus comprises a wind directional means for turning a revolving body to point the windmill in the windward direction. In this device the wind is guided along one direction so that windmill generator apparatus allows electricity to be generated efficiently regardless of wind direction. In this device the wind is, however, guided along a one-dimensional patch due to the fact that in operation the wind direction is parallel the longitudinal axis of the shaft to which the generator is attached. In other types of wind mills the incoming wind needs to be guided in a direction being basically perpendicular to that direction.

### Object of the Invention

It is an object for the present invention to specify an efficiency improved device for converting wind energy to heat and/or electricity. It is further an object of the present invention to specify a device for converting wind energy to heat and/or electricity having a wind guide that is configured in a way so that more devices can be arranged adjacent to one another without interfering with one another. The invention also aims for providing a device for converting wind energy to heat and/or electricity that is less noisy than the prior art devices.

### Description of the Invention

These and other objects and advantages of the present invention will be apparent from the following description and the appended claims. It will be recognized that the foregoing description is not intended to list all of the features and advantages of the invention. Various embodiments of the inventions will satisfy various combinations of the objects of the invention and some embodiments of the invention will provide fewer than all of the listed features and satisfy fewer than all the listed objectives.

The objects of the present invention can be accomplished by a device as described in the introductory part of claim 1 that is characteristic in that the windmill driven energy converting device comprises a rotatable mounted wind guide that is configured to change its orientation according to the wind direction and that wind guide is configured to guide the wind from a first direction (H) being basically perpendicular to the longitudinal axis of the shaft to a second direction (V) being basically parallel to the longitudinal axis of the shaft and that the direction of the wind leaving the converting device is basically parallel to the longitudinal axis of the shaft.

Herby it can be achieved that the wind guide can guide the wind independently on the wind direction and thus the loss of efficiency will be minimised compared with the prior art the wind guides that are fixed and restricted from rotation. Therefore, a higher amount of the kinetic energy of the wind can be used to generate heat by the energy converting device.

Moreover when the direction of the wind leaving the converting device is basically parallel to the longitudinal axis of the shaft it is possible to arrange several converting devices in a line formation next to one another without causing problems with interference from the adjacent converting device(s). If the wind is released in a direction that is basically perpendicular to the longitudinal axis of the shaft the wind will have a negative influence on the efficiency of the adjacent apparatuses.

In one embodiment according to the invention the wind guide comprises a wind inlet opening with an area Aᵢ and a wind outlet opening with an area Aₒ, where Aᵢ/Aₒ is greater than 1. Hereby it is achieved that the wind is accelerated along its way through the wind guide because the wind flows through a duct having a gradually reduced cross sectional area. Therefore, the wind velocity and thus the air pressure is increased and less turbulence will be generated at back side of the blades. Accordingly, the overall efficiency of the energy converting device may be increased considerably.

In a preferred embodiment according to the invention Aₒ /Aᵢ is greater than 2, preferable Aᵢ/Aₒ is greater than 2 and less than 5. Hereby the overall efficiency may be increased even more.

In a preferred embodiment according to the invention the wind guide comprises a basically shaped tubular body rotatably mounted to the shaft and being arranged such that it rotates according to the direction of the wind that enters the inlet opening. The shape tubular body ensures that the wind direction can be changed from e.g. a horizontal direction to a vertical direction. Furthermore, the shaped tubular body secures that the losses in kinetic energy of the wind is minimised.

In a preferred embodiment according to the invention the wind guide has a bottom surface member extending basically perpendicular to the longitudinal axis of the shaft. It may moreover be beneficial if the wind guide has a top member with a conical constriction or narrowing ensuring that the Aᵢ/Aₒ is greater than 1.

In another preferred embodiment according to the invention the blades are fixed to the inner side of a blade ring. Hereby it is achieved that the noise from the blades can be significantly reduced. Furthermore, the efficiency of the energy converting device can be increased. The low level of noise makes it possible to install the energy converting device close to house holds e.g. on a roof of a building such as a domestic building.

In yet another preferred embodiment according to the invention the energy converting device comprises a number of outer support members extending along the outer side of the energy converting device so that a blade ring can be fixed to these outer support members. The support members may by way of example be rods or longitudinal tubular bodies extending along the outer side of the energy converting device. Such construction secures a firm attachment of the blade ring.

In an embodiment according to the invention the wind guide is attached to a first bearing that is fixed to the shaft and the hub of the blades is attached to a second bearing that is fixed to the shaft in the top area of the wind guide and a third bearing is attached to the shaft above the second bearing so that the third bearing is attached to the blade ring. This construction secures that a very robust and strong mounting of the shaft. The use of several bearings makes it possible to apply a thinner and less rigid shaft.

In a preferred embodiment according to the invention the energy converting device comprises means for changing the axial position of the electrically conducting wall relative to the rotor. The axial position of the electrically conducting wall determines degree of magnetic induction generated by the rotation of the permanent magnets. That means that the axial position of the electrically conducting wall determines the generated resistance by generation of eddy currents. In other words, by changing the axial position of the electrically conducting wall relative to the rotor it is possible to control the mechanical resistance. The axial position of the electrically conducting wall relative to the rotor can be changed by various means. It is, by way of example, possible to use an electrical actuator or a hydraulic actuator that may be activated according to the rotational speed of the rotor. The pressure generated due to the centrifugal force that arise when e.g. the fluid that surrounds the electrically conducting wall may be used to change the axial position of the electrically conducting wall relative to the rotor.

Hereby it is achieved that the start moment of the windmill can be lowered so that an easy start up can be achieved. Moreover, heat can be produced at low wind speeds and furthermore, it is possible to keep the rotational speed inside a desired range and the level of noise made by the windmill can be reduced due to the fact that the speed of the windmill can be reduced by increasing the resistance of the stator. In combination with appropriate pitch regulating means it would be possible to control the speed of the windmill in a specific range e.g. 20-40 rpm.

In one embodiment of the invention a gear is arranged in the heat-carrying fluid of the heat exchanger.

Hereby it can be achieved that heat generated by the friction in the gear is utilised and used so that the overall efficiency of the energy converting device is increased. Moreover, in a preferred embodiment of the invention the heat-carrying fluid is configured to lubricate the gear. The fluid may e.g. be appropriate oil.

In a preferred embodiment according to the invention the energy converting device is configured to be mounted on a roof of a building in a manner where the device is arranged in a pipe-like member so that the blades can not be seen. The wind is guided through the pipe-like member by using the rotable mounted wind guide.

In a preferred embodiment according to the invention the wind guide is rotable mounted so that it is free to rotate in both direction of rotation.

In one embodiment of the invention the energy converting device comprises a wind turbine configured to generate electricity. Hereby it can be achieved that energy consuming parts (e.g. an electrical actuator, a valve or a pump). It would also be possible to convert the generated electricity from AC to DC and store it in a battery for later use.

The invention is not limited to the described embodiments which can be modified in many ways. This applies in particular to the shape and the materials of the blades, the shaft and wind guide.

### Description of the Drawing

Preferred embodiments of the present invention will now be more particularly described, by way of example, with reference to the accompanying drawing, wherein:
- Fig. 1: is a cross sectional view of a wind guide according to the invention;
- Fig. 2: is another cross sectional view of the wind guide shown in Fig. 1 arranged in energy converting device;
- Fig. 3: shows the embodiment from Fig. 1 in another cross sectional view.
- Fig. 4: is a perspective view (seen from above) of one embodiment of the energy converting device according to the invention. ;
- Fig. 5a: shows a perspective view of the electrically conducting wall in a position where the electrically conducting wall encloses the lower part of the rotor;
- Fig. 5b: shows a perspective view of the electrically conducting wall in a position where the electrically conducting wall encloses the rotor completely;
- Fig. 6: is a top view of the electrically conducting wall enclosing the rotor;
- Fig. 7a: is a cross sectional view of a wind guide according to the invention and
- Fig. 7b: is another view of a wind guide.

### Detailed Description of the Invention

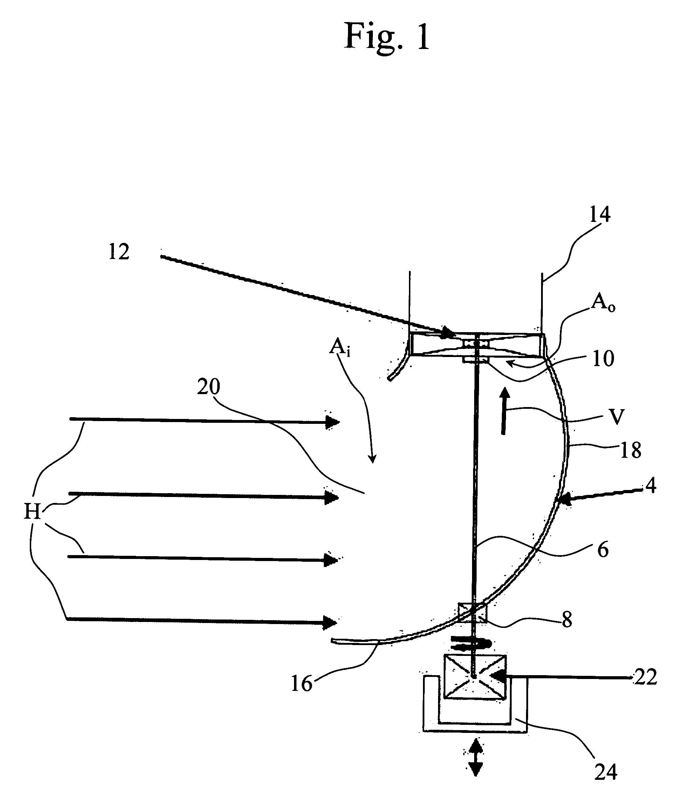

Fig. 1 illustrates a cross sectional view of one embodiment of the wind guide 4 according to the invention. The wind guide 4 is rotable mounted to a shaft 6 via a first bearing 8. A second bearing 10 located at the hub 11 of the blades 12 is attached to the shaft 6 in the top area of the wind guide 4 and a third bearing (not shown) is attached to the shaft 6 above the second bearing 10 so that the third bearing is attached to the blade ring 14. This construction secures that a very robust and strong mounting of the shaft 6. The use of several bearings 8, 10 makes it possible to apply a thin shaft 6.

It can be seen that the wind guide 4 is configured to change its orientation according to the wind direction and it can guide the wind from a first direction H basically perpendicular to the longitudinal axis of the shaft 6 to a second direction V basically parallel to the longitudinal axis of the shaft 6. The wind guide 4 has a bottom surface member 16 extending basically perpendicular to the longitudinal axis of the shaft 6. Thus the bottom surface member 16 is basically parallel to the first direction H. The wind guide 4 also has an arced top member 18 with a narrowing. The top member 18 extends basically parallel to the second direction V. When the wind enters the wind guide 4 in the inlet opening 20 it has a direction basically corresponding to the first direction H. However, the shaped inner geometry of wind guide 4 changes the direction of the wind so that the wind has a direction basically corresponding to the second direction V when the wind passes the blades 12. The cross sectional area Aᵢ of the wind inlet opening 20 is rather large compared with the wind outlet opening cross sectional area Aₒ. In fact is can be seen from Fig. 1 that Aᵢ/Aₒ is greater than 1.

Below the first bearing 8 the shaft 6 is attached to a rotor 22 that is enclosed by an electrically conducting wall 24 arranged in a stator (not shown). The electrically conducting wall 24 is configured to be displaced axially relative to the rotor 22. The displacement of the electrically conducting wall 24 relative to the rotor 22 can be provided e.g. by means of an electrical actuator or by any other suitable means.

When a poled magnet field passes an electrically conducting material such as an electrically conducting wall 24 or a coil an opposing magnetic field is generated. This magnetic field is proportional to the square of the rotational speed and the square of the diameter of the coil or the electrically conducting wall 24.

The rotor 22 being enclosed by an electrically conducting wall 24 is used to generate heat based on the magnetic induction generated by the rotation of the permanent magnets. The axial position of the electrically conducting wall 24 relative to the rotor 22 determines degree of magnetic induction generated by the rotation of the permanent magnets 28. Therefore, the axial position of the electrically conducting wall 24 determines the generated resistance by generation of eddy currents and thus, by changing the axial position of the electrically conducting wall 24 relative to the rotor 22 it is possible to control the mechanical resistance. Therefore, it is possible to control the rotational speed of the rotor 22 by changing the axial position of the electrically conducting wall 24 relative to the rotor 22. This mechanism can be used to protect the energy converting device 2 in case of extreme conditions (heavy wind by way of example). A control can be done in many ways and can be carried out by a man skilled in the art.

It is also possible to have a generator (not shown) coupled to the shaft 6. In this way it is possible to generate electricity. In one embodiment according to the invention the shaft 6 is connected to both a generator and a heat generating member (e.g. a rotor 22 enclosed by an electrically conducting wall 24 like shown in Fig. 1). Hereby it is achieved that both electricity and heat can be generated. Moreover the generated electricity may be stored in a battery or used to drive electrical devices e.g. a pump for circulating a fluid, an electrical actuator, valves or any other electrical device.

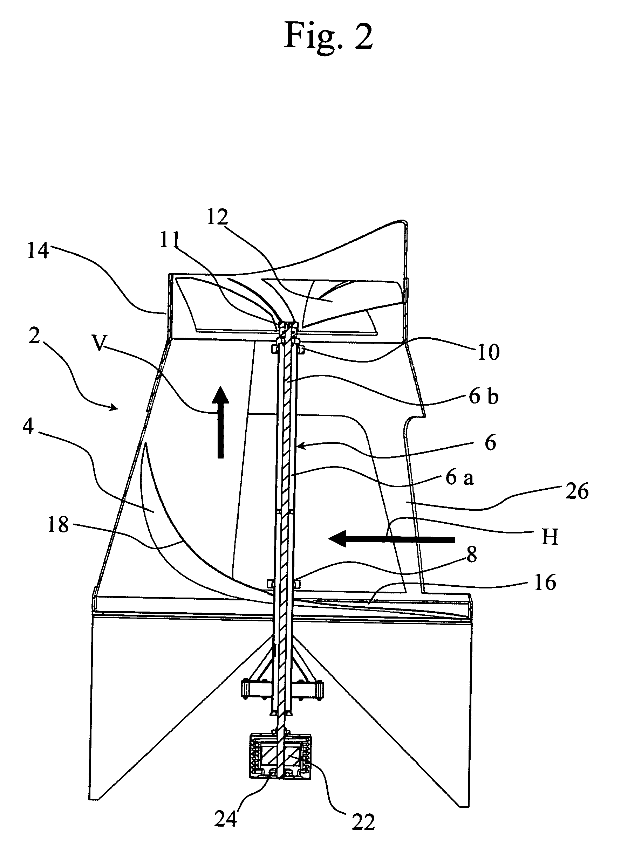

In Fig. 2 the wind guide 4 is arranged in an energy converting device 2 according to the invention. The blades 12 are arranged in the top of the energy converting device 2 and the blades are attached to the shaft 6 via a hob 11. The wind guide 4 is attached to the shaft 6 via the first bearing 8 in the bottom part of the energy converting device 2 and the second bearing 10 provided in the top part of the energy converting device 2 just below the hob 11 of the blades 12. The shaft 6 comprises a through going inner part 6a enclosed by an outer part 6b extending almost along the entire length of the inner part 6a of the shaft 6. In both ends of the shaft 6 the inner part 6a of the shaft 6 extends beyond the outer part 6b of the shaft 6. In the upper end of the shaft 6, the inner part 6a of the shaft 6 is attached to the hob 11 of the blades 12 and in the lower end of the shaft 6 the inner part 6a of the shaft 6 is attached to the rotor 22. A bottom bearing 24 is provided below the rotor 22.

In operation the wind that enters the energy converting device 2 has a direction H and this direction H is maintained during winds passage of the bottom surface member 16 of the wind guide 4, however; the wind direction is changed as the wind passes the arced top member 18 of the wind guide 4. The wind is directed along the direction V in the same manner as explained with reference to Fig. 1. The blade ring 14 is attached to the outer support members 26 extending from the bottom part to the top part of the energy converting device 2.

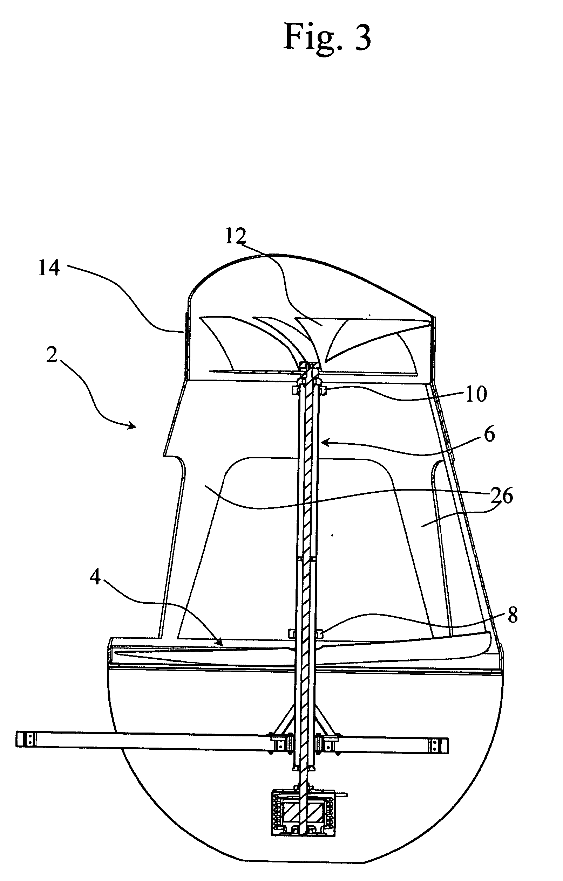

Fig. 3 shows the same embodiment as illustrated in Fig. 2, however; from another cross sectional view. Two outer support members 26 are visible and only the flat part of the wind guide 4 is visible.

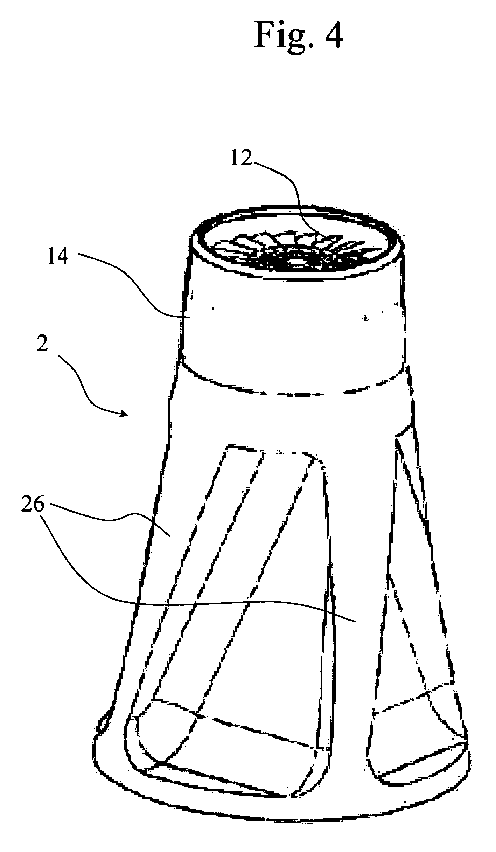

A perspective view of a preferred embodiment of the energy converting device 2 according to the invention can be seen in Fig. 4. It can be seen that the blade ring 14 is attached to the outer support members 26 that extend along the outer surface of the energy converting device 2. The energy converting device 2 is configured to be mounted on a roof - a roof of a domestic building by way of example. It is possible to mount the energy converting device 2 in an upright position as indicated in Fig. 2, 3 and 4. However, it would also be possible to modify the energy converting device 2 and arrange it horizontally.

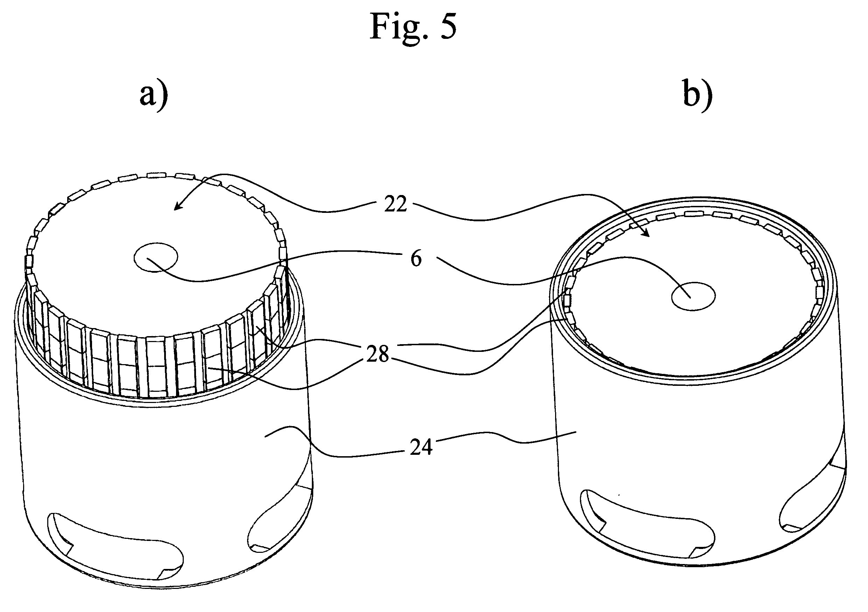

In Fig. 5a and Fig. 5b a central part of a preferred embodiment according to the invention the energy converting device 2 is illustrated. The central part is the means for changing the axial position of the electrically conducting wall 24 relative to the rotor 22. The axial position of the electrically conducting wall 24 determines degree of magnetic induction generated by the rotation of the permanent magnets 28. Thus, the axial position of the electrically conducting wall 24 determines the generated resistance by generation of eddy currents. Accordingly, by changing the axial position of the electrically conducting wall 24 relative to the rotor 22 it is possible to control the mechanical resistance and hereby the rotational speed of the rotor 22.

In Fig. 5a the electrically conducting wall 24 has been displaced relative to the rotor 22 so that the generated resistance by generation of eddy currents is reduced. In Fig. 5b the electrically conducting wall 24 encloses the entire rotor 22 and thus generated resistance by generation of eddy currents is maximal.

It is possible to achieve a low start moment of the energy converting device 2 so that it would be very easy to start up. Moreover, heat can be produced at low wind velocity and furthermore, it is possible to keep the rotational speed inside a desired range and the level of noise made by the energy converting device 2 can be reduced because the speed of the windmill can be reduced by increasing the resistance of the stator. In combination with appropriate pitch regulating means it would be possible to control the speed of the rotor 22 in a specific range e.g. 20-40 rpm.

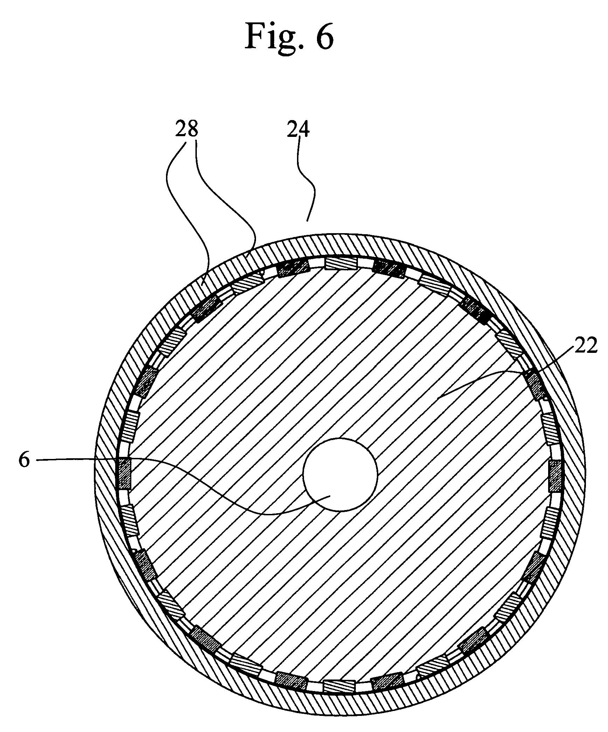

Fig. 6 illustrates a schematically top view of a rotor 22 enclosed by an electrically conducting wall 24. The rotor 22 comprises a number of permanent magnets 28 that are evenly arranged along the outer periphery of the rotor 22.

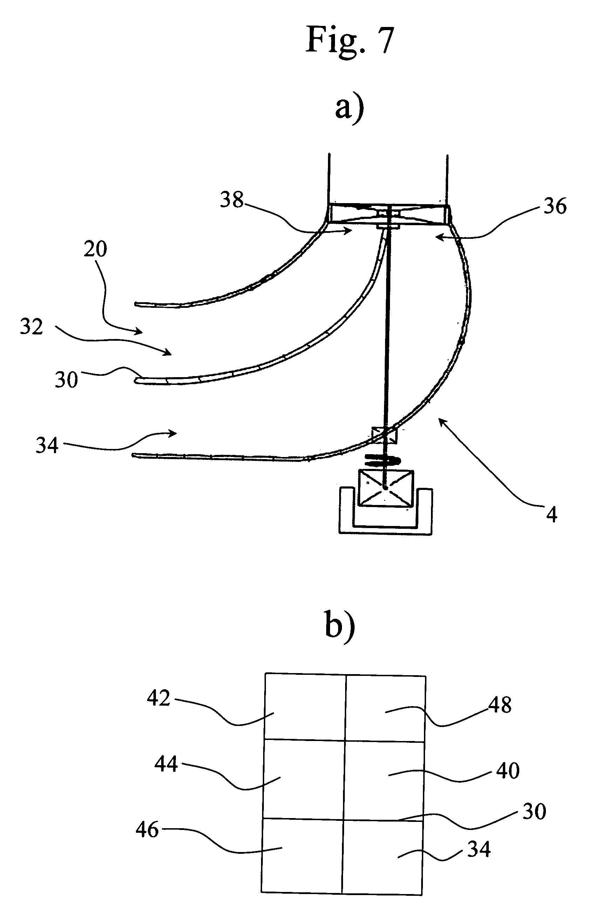

Fig. 7 a) shows a cross sectional view of a wind guide 4 according to the invention. The inlet opening 20 of the wind guide 4 is provided with a partition wall 30 that partition the inlet opening 20 into section 32 and section 34. The wind that enters section 32 is guided to the front part 38 of the blades 12 while the wind that enters section 34 is guided to the back part 38 of the blades 12. Hereby the wind can be guided to the blades 12 in a manner that secures a balanced mechanical load on the blades 12 so that the wind energy can be used in the most efficient way.

Fig. 7 b) illustrates an example of how the opening 20 of a wind guide 4 can be partitioned. The opening 20 is divided into 6 sections 34, 40, 42, 44, 46, 48. Hereby it is possible to guide the wind to different areas of the blades 12 and accordingly achieve a very efficient conversion of the wind energy. Generally, the number of partition walls 30 may be selected according to specific demands. Thus, different numbers of sections 34, 40, 42, 44, 46, 48 can be achieved.

## Claims

1. Windmill driven energy converting device (2) comprising a number of wind blades (12) attached to a shaft (6) that is connected to:
a rotor (22) with permanent magnets (28), which rotor (22) is arranged inside or outside a stator having an electrically conducting wall (24) that is configured to be subjected to magnetic induction generated by the rotation of the permanent magnets (28) and thus configured to generate heat through generation of eddy currents and a heat exchanger comprising a heat-carrying media (e.g. a fluid) configured to take up thermal energy from the conducting wall (24), and optionally
a generator
whereby the windmill driven energy converting device (2) comprises a rotatable mounted wind guide (4) that is configured to change its orientation according to the wind direction and that wind guide is configured to guide the wind from a first direction (H) being basically perpendicular to the longitudinal axis of the shaft (6) to a second direction (V) being basically parallel to the longitudinal axis of the shaft (6) and that the direction of the wind leaving the converting device (2) is basically parallel to the longitudinal axis of the shaft (6), **characterised in that** the axial position of the electrically conducting wall (24) relative to the rotor (22) can be changed to control mechanical resistance by generation of eddy current and rotational speed of the rotor (22).

2. Windmill driven energy converting device (2) according to claim 1 **characterised in that** the wind guide (4) comprises a wind inlet opening (20) with an area Aᵢ and an wind outlet opening with an area Aₒ, where Aᵢ/Aₒ is greater than 1.

3. Windmill driven energy converting device (2) according to claim 2 **characterised in that** Aᵢ/Aₒ is greater than 2, preferable Aᵢ/Aₒ is greater than 2 and less than 5.

4. Windmill driven energy converting device (2) according to one of the preceding claims **characterised in that** the wind guide (4) comprises a basically J-shaped tubular body rotatably mounted to the shaft (6) and being arranged such that it rotates according to the direction of the wind that enters the inlet opening (20).

5. Windmill driven energy converting device (2) according to one of the preceding claims **characterised in that** the blades (12) are fixed to the inner side of a blade ring (14).

6. Windmill driven energy converting device (2) according to claim 5 **characterised in that** the energy converting device (2) comprises outer support members (26) extending along the outer side of the energy converting device (2) and that the blade ring (14) is fixed to the outer support members (26).

7. Windmill driven energy converting device (2) according to claim 5 or claim 6 **characterised in that** the wind guide (4) is attached to a first bearing (8) that is fixed to the shaft (6) and that a hub (11) of the blades (12) is attached to a second bearing (10) that is fixed to the shaft (6) in the top area of the wind guide (4) and that a third bearing is attached to the shaft (6) above the second bearing (10) and that the third bearing is attached to the blade ring (14).

8. Windmill driven energy converting device (2) according to one of the preceding claims **characterised in that** the energy converting device (2) comprises means for changing the axial position of the electrically conducting wall (24) relative to the rotor (22).

9. Windmill driven energy converting device (2) according to one of the preceding claims **characterised in that** a gear is arranged in the heat-carrying fluid of the heat exchanger.

10. Windmill driven energy converting device (2) according to one of the preceding claims **characterised in that** the energy converting device (2) is configured to be mounted vertically on a roof of a domestic building.

11. Windmill driven energy converting device (2) according to one of the preceding claims **characterised in that** the wind guide (4) is portioned into at least two sections.

## Patentansprüche

1. Windradbetriebene Energieumwandlungsvorrichtung (2) umfassend eine Anzahl von Windradschaufeln (12), die an einer Welle (6) angebracht sind, die verbunden ist mit:
einem Rotor (22) mit Permanentmagneten (28), wobei der Rotor (22) innerhalb oder außerhalb eines Stators mit einer elektrisch leitenden Wand (24) angeordnet ist, die dazu ausgebildet ist, einer magnetischen Induktion unterworfen zu werden, die durch die Drehung der Permanentmagnete (28) erzeugt wird, und somit ausgebildet ist, um Wärme durch die Erzeugung von Wirbelströmen zu erzeugen, sowie einen Wärmetauscher umfassend ein wärmeleitendes Medium (z. B. ein Fluid), der dazu ausgebildet ist, thermische Energie von der stromleitenden Wand (24) aufzunehmen, und optional einem Generator,
wobei die windradbetriebene Energieumwandlungsvorrichtung (2) eine drehbar montierte Windführung (4) umfasst, die dazu ausgebildet ist, ihre Orientierung in Übereinstimmung mit der Windrichtung zu ändern, und wobei die Windführung dazu ausgebildet ist, den Wind aus einer ersten Richtung (H), die im Wesentlichen senkrecht auf die Längsachse der Welle (6) steht, in eine zweite Richtung (V) umzuleiten, die im Wesentlichen parallel zu der Längsachse der Welle (6) ist, und so dass die Richtung des Windes, der aus der Umwandlungsvorrichtung (2) austritt, im Wesentlichen parallel zu der Längsachse der Welle (6) ist, **dadurch gekennzeichnet, dass** die axiale Stellung der elektrisch leitenden Wand (24) relativ zu dem Rotor (22) geändert werden kann, um den mechanischen Widerstand durch Erzeugung von Wirbelstrom und die Drehzahl des Rotors (22) zu steuern.

2. Windradbetriebene Energieumwandlungsvorrichtung (2) nach Anspruch 1, **dadurch gekennzeichnet, dass** die Windführung (4) eine Windeinlassöffnung (20) mit einer Fläche Aᵢ und eine Windauslassöffnung mit einer Fläche Aₒ aufweist, wobei Aᵢ/ Aₒ größer als 1 ist.

3. Windradbetriebene Energieumwandlungsvorrichtung (2) nach Anspruch 2, **dadurch gekennzeichnet, dass** Aᵢ/Aₒ größer als 2 ist, und Aᵢ/Aₒ vorzugsweise größer als 5 ist.

4. Windradbetriebene Energieumwandlungsvorrichtung (2) nach einem der vorhergehenden Ansprüche, **dadurch gekennzeichnet, dass** die Windführung (4) einen im Wesentlichen J-förmigen röhrenartigen Körper umfasst, der drehbar an der Welle (6) montiert und so angeordnet ist, dass er sich in Übereinstimmung mit der Richtung des Windes dreht, der in die Einlassöffnung (20) eintritt.

5. Windradbetriebene Energieumwandlungsvorrichtung (2) nach einem der vorhergehenden Ansprüche, **dadurch gekennzeichnet, dass** die Schaufeln (12) an der Innenseite eines Schaufelrings (14) fixiert sind.

6. Windradbetriebene Energieumwandlungsvorrichtung (2) nach Anspruch 5, **dadurch gekennzeichnet, dass** die Energieumwandlungsvorrichtung (2) äußere Stützelemente (26) umfasst, die sich entlang der äußeren Seite der Energieumwandlungsvorrichtung (2) erstrecken, und dass der Schaufelring (14) an den äußeren Stützelementen (26) fixiert ist.

7. Windradbetriebene Energieumwandlungsvorrichtung (2) nach Anspruch 5 oder Anspruch 6, **dadurch gekennzeichnet, dass** die Windführung (4) an einem ersten Lager (8) angebracht ist, das an der Welle (6) fixiert ist, und dass eine Nabe (11) der Schaufeln (12) an einem zweiten Lager (10) angebracht ist, das an der Welle (6) in dem oberen Bereich der Windführung (4) fixiert ist, und dass ein drittes Lager an der Welle (6) oberhalb des zweiten Lagers (10) angebracht ist, und dass das dritte Lager an dem Schaufelring (14) angebracht ist.

8. Windradbetriebene Energieumwandlungsvorrichtung (2) nach einem der vorhergehenden Ansprüche, **dadurch gekennzeichnet, dass** die Energieumwandlungsvorrichtung (2) Mittel zum Verändern der axialen Stellung der elektrisch leitenden Wand (24) relativ zu dem Rotor (22) umfasst.

9. Windradbetriebene Energieumwandlungsvorrichtung (2) nach einem der vorhergehenden Ansprüche, **dadurch gekennzeichnet, dass** ein Zahnrad in dem wärmeführenden Fluid des Wärmetauschers angeordnet ist.

10. Windradbetriebene Energieumwandlungsvorrichtung (2) nach einem der vorhergehenden Ansprüche, **dadurch gekennzeichnet, dass** die Energieumwandlungsvorrichtung (2) dazu ausgebildet ist, vertikal auf dem Dach eines Wohngebäudes montiert zu werden.

11. Windradbetriebene Energieumwandlungsvorrichtung (2) nach einem der vorhergehenden Ansprüche, **dadurch gekennzeichnet, dass** die Windführung (4) in zumindest zwei Abschnitte unterteilt ist.

## Revendications

1. Dispositif (2) de conversion d'énergie entraîné par éolienne comprenant un certain nombre d'aubes (12) attachées à un arbre (6) qui est relié:
à un rotor (22) avec des aimants permanents (28), lequel rotor (22) est agencé à l'intérieur ou à l'extérieur d'un stator ayant une paroi électriquement conductrice (24) qui est configurée pour être soumise à une induction magnétique générée par la rotation des aimants permanents (28) et donc configurée pour générer de la chaleur à travers la génération de courants de Foucault et un échangeur de chaleur comprenant des agents de transfert de chaleur (par exemple un fluide) configurés pour absorber de l'énergie thermique à partir de la paroi conductrice (24), et éventuellement à un générateur
moyennant quoi le dispositif (2) de conversion d'énergie entraîné par éolienne comprend un dispositif de guidage de vent (4) monté en rotation qui est configuré pour changer son orientation en fonction de la direction du vent et que le dispositif de guidage de vent est configuré pour guider le vent d'une première direction (H) étant essentiellement perpendiculaire à l'axe longitudinal de l'arbre (6) à une deuxième direction (V) étant essentiellement parallèle à l'axe longitudinal de l'arbre (6) et que la direction du vent sortant du dispositif (2) de conversion est essentiellement parallèle à la l'axe longitudinal de l'arbre (6), **caractérisé en ce que** la position axiale de la paroi électriquement conductrice (24) par rapport au rotor (22) peut être changée pour réguler la résistance mécanique par génération de courant de Foucault et la vitesse de rotation du rotor (22).

2. Dispositif (2) de conversion d'énergie entraîné par éolienne selon la revendication 1, **caractérisé en ce que** le dispositif de guidage de vent (4) comprend une ouverture d'entrée de vent (20) avec une zone Aᵢ et une ouverture de sortie de vent avec une zone Aₒ, où Aᵢ/Aₒ est supérieur à 1.

3. Dispositif (2) de conversion d'énergie entraîné par éolienne selon la revendication 2 **caractérisé en ce que** Aᵢ/Aₒ est supérieur à 2, de préférence Aᵢ/Aₒ est supérieur à 2 et inférieur à 5.

4. Dispositif (2) de conversion d'énergie entraîné par éolienne selon l'une des revendications précédentes, **caractérisé en ce que** le dispositif de guidage de vent (4) comprend un corps tubulaire essentiellement en forme de J monté en rotation sur l'arbre (6) et étant agencé de sorte qu'il tourne en fonction de la direction du vent qui pénètre dans l'ouverture d'entrée (20).

5. Dispositif (2) de conversion d'énergie entraîné par éolienne selon l'une des revendications précédentes, **caractérisé en ce que** les aubes (12) sont fixées au côté intérieure d'un aubage (14).

6. Dispositif (2) de conversion d'énergie entraîné par éolienne selon la revendication 5, **caractérisé en ce que** le dispositif (2) de conversion d'énergie comprend des éléments de support extérieurs (26) s'étendant le long du côté extérieur du dispositif (2) de conversion d'énergie et **en ce que** l'aubage (14) est fixé aux éléments de support extérieurs (26).

7. Dispositif (2) de conversion d'énergie entraîné par éolienne (2) selon la revendication 5 ou 6, **caractérisé en ce que** le dispositif de guidage de vent (4) est attaché à un premier palier (8) qui est fixé à l'arbre (6) et **en ce qu'**un moyeu (11) d'aubes (12) est attaché à un deuxième palier (10) qui est fixé à l'arbre (6) dans la zone supérieure du dispositif de guidage de vent (4) et **en ce qu'**un troisième palier est attaché à l'arbre (6) au-dessus du deuxième palier (10) et **en ce que** le troisième palier est attaché à l'aubage (14).

8. Dispositif (2) de conversion d'énergie entraîné par éolienne selon l'une des revendications précédentes, **caractérisé en ce que** le dispositif (2) de conversion d'énergie comprend un moyen pour changer la position axiale de la paroi électriquement conductrice (24) par rapport au rotor (22).

9. Dispositif (2) de conversion d'énergie entraîné par éolienne selon l'une des revendications précédentes, **caractérisé en ce qu'**un engrenage est agencé dans le fluide de transfert de chaleur de l'échangeur de chaleur.

10. Dispositif (2) de conversion d'énergie entraîné par éolienne selon l'une des revendications précédentes, **caractérisé en ce que** le dispositif (2) de conversion d'énergie est configuré pour être monté verticalement sur un toit d'un bâtiment d'habitation.

11. Dispositif (2) de conversion d'énergie entraîné par éolienne selon l'une des revendications précédentes, **caractérisé en ce que** le dispositif de guidage de vent (4) est divisé en au moins deux sections.
